## Europäisches Patentamt
## European Patent Office
## Office européen des brevets

(19)

(11) Numéro de publication: **0 232 643**
**B1**

(12)

# FASCICULE DE BREVET EUROPEEN

(45) Date de publication du fascicule du brevet:
24.10.90

(51) Int. Cl.⁵: **C08F 10/00**, C08F 4/06

(21) Numéro de dépôt: 86402772.7

(22) Date de dépôt: 11.12.86

(54) Procédé de traitement de catalyseurs sphériques de polymérisation des oléfines. Application du catalyseur obtenu à la polymérisation des oléfines.

(30) Priorité: 18.12.85 FR 8518799

(43) Date de publication de la demande:
19.08.87 Bulletin 87/34

(45) Mention de la délivrance du brevet:
24.10.90 Bulletin 90/43

(84) Etats contractants désignés:
AT BE DE ES FR GB IT NL SE

(56) Documents cités:
FR-A- 2 474 039

(73) Titulaire: ATOCHEM, 4 & 8, Cours Michelet La
Défense 10, F-92800 Puteaux(FR)

(72) Inventeur: Brun, Claude, Clos Saint Pierre, F-64320 Idron
Bizanos(FR)
Inventeur: Cheux, Auguste, 18, Route d'Artix,
F-64370 Arthez de Bearn(FR)
Inventeur: Avaro, Michel, 15, Rue de la Grange Domaine
de Saint-Léon, F-64000 Pau(FR)

(74) Mandataire: Foiret, Claude et al, ATOCHEM
Département Propriété Industrielle, F-92091 Paris la
Défense 10 Cédex 42(FR)

**Description**

La présente invention concerne un procédé de traitement de catalyseur sphérique de polymérisation des oléfines permettant de lui conserver sa morphologie pendant la polymérisation. Le procédé consiste à prépolymériser de l'éthylène étant entendu que sous la dénomination éthylène on entend également les mélanges d'éthylène et d'oléfines, jusqu'à un degré d'avancement réduit, un produit, appelé sphéroprotecteur, à effet de conservateur de sphéricité résultant de la réaction d'un alkylaluminium et d'un donneur d'électrons étant associé aux composants au plus tard après la prépolymérisation. Un tel catalyseur modifié est particulièrement adapté pour la fabrication de polyéthylène linéaire en poudre à morphologie sphérique.

Afin de fabriquer des polyéthylènes linéaires sphériques : homopolymères d'éthylène et copolymères éthylène-alpha oléfine, il est connu d'utiliser des catalyseurs sphériques à base de métal de transition et plus particulièrement de titane. Toutefois, dans les conditions des procédés industriels de polymérisation, la morphologie sphérique du catalyseur est rapidement détruite. Les particules sphériques se détruisent rapidement en particules à morphologie mal définie, du type par exemple granulaire, ce qui conduit à des polymères plus ou moins granulaires de faible coulabilité, caractéristique liée à la morphologie plus ou moins sphérique du polymère obtenu. Ces polymères sont également riches en très fines particules, inférieures à 100 μm (microns), conduisant à des problèmes de sécurité et entrainant des difficultés dans le procédé de fabrication.

Le procédé objet de l'invention, selon lequel la morphologie sphérique du catalyseur est conservée pendant la polymérisation de la ou des oléfines, confirmant le principe selon lequel les polymères formés sont la réplique morphologique du catalyseur, conduit à un prépolymère catalyseur permettant d'obtenir par polymérisation en suspension ou en phase gazeuse d'éthylène ou de mélange d'éthylène et d'alpha-oléfine un polyéthylène linéaire en poudre à morphologie sphérique. Cette morphologie sphérique est encore déterminée subjectivement. Sans en faire une définition exclusive, on peut admettre qu'une poudre de polyéthylène possède une morphologie sphérique quand les particules de poudre sont en moyenne, par examen microscopique optique, sensiblement sphériques, symétriques, sans élongation, à surface lisse au grossissement 20. Ce mode d'appréciation semble être confirmé par les tentatives d'analyses expérimentales de J.K. BEDDOW, Fine Particle Research Group., Chemical and Materials Engineering, University of Iowa dans "Proceedings of the ACS Division of Polymeric Materials : Science and Ingineering" Volume 53 Fall Meeting 1985 - Chicago pages 261-262.

Le procédé de traitement du catalyseur sphérique de polymérisation des oléfines est caractérisé en ce qu'on effectue, en sa présence, une prépolymérisation en présence d'un cocatalyseur choisi parmi les alkylaluminiums, au moins partiellement en suspension, de l'éthylène jusqu'à un degré de prépolymérisation adapté au procédé de polymérisation dans lequel le prépolymère sera mis ultérieurement en oeuvre, un produit de réaction entre un alkylaluminium et un donneur d'électrons étant associé aux composants au plus tard après la prépolymérisation. Ce produit de réaction, appelé sphéroprotecteur se présente habituellement à l'état liquide ou en solution.

Le prépolymère obtenu selon le procédé est utilisé comme catalyseur dans les procédés de polymérisation en suspension et en phase gazeuse, soit en lit agité soit en lit fluidisé. Selon le procédé de polymérisation envisagé, la prépolymérisation en présence du catalyseur doit être plus ou moins poussée. Dans le cas où le prépolymère sera utilisé comme catalyseur dans un procédé en suspension, le degré de prépolymérisation est de préférence inférieur à 100, par contre pour un procédé en phase gazeuse, le degré de prépolymérisation est de préférence supérieur à 100 et telle que le prépolymère formé représente au plus 10 % en poids du polymère final.

Le catalyseur sphérique initial de polymérisation des oléfines est un produit connu en lui-même. Il est habituellement le résultat de la combinaison d'au moins un composé de métal de transition, un composé du magnésium, un halogène et éventuellement un donneur ou accepteur d'électrons et de tout autre composé utilisable dans ces types de catalyseur.

Le composé de métal de transition est généralement choisi parmi les composés de formule $Me(OR)_nX_{m-n}$ dans laquelle :
- Me est le vanadium, le chrome et plus particulièrement le titane ;
- X est le brome, l'iode et plus particulièrement le chlore ;
- R est un radical hydrocarboné aliphatique ou aromatique de $C_1$ à $C_{14}$, ou COR' avec R' un radical hydrocarboné aliphatique ou aromatique de $C_1$ à $C_{14}$.
- "m" correspond à la valence du métal de transition et "n" est une valeur inférieure ou égale à "m".

Le composé de métal de transition particulièrement recommandé est choisi parmi les composés du titane de formule $Ti(OR)_xCl_{4-x}$, R étant défini ci-dessus, x étant compris entre 0 et 4.

Le composé du magnésium est habituellement choisi parmi les composés de formule $Mg(OR)_nX_{2-n}$ dans laquelle X est le brome, l'iode et plus particulièrement le chlore, R est l'hydrogène ou un radical alkyl ou cycloalkyl et "n" est inférieur ou égal à 2.

Le donneur ou accepteur d'électrons est un composé organique liquide ou solide connu pour entrer dans la composition de ces catalyseurs. Le donneur d'électrons peut être un composé mono ou polyfonctionnel avantageusement choisi parmi les acides carboxyliques aliphatiques ou aromatiques et leurs esters alcoyliques, les éthers aliphatiques ou cycliques, les cétones, les esters vinyliques, les dérivés acryliques, en particulier acrylates ou méthacrylates d'alcoyle, et les silanes. Conviennent notamment comme donneurs d'électrons les composés tels que paratoluate de méthyle, benzoate d'éthyle, acétate d'éthyle ou de butyle, éther éthylique, para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle, et les silanes tels que phényltriéthoxysilane, les alcoxysilanes aromatiques ou aliphatiques.

L'accepteur d'électrons est un acide de Lewis, choisi de préférence parmi les chlorure d'aluminium, le trifluorure de bore, le chloranile ou encore les alcoylaluminiums et alcoylmagnésiums.

Dans un mode préféré de prépolymérisation en suspension, sous agitation en régime turbulent, on prépolymérise l'éthylène, en présence éventuellement d'un limitateur de chaîne et/ou d'un cocatalyseur choisi parmi les alkylaluminiums connus pour cet emploi, à une température comprise entre 0 et 110°C, de préférence entre 20 et 60°C, pour une pression totale inférieure à 20 bars absolus constituée essentiellement de gaz inerte tel que l'azote. Afin de conserver au maximum la morphologie sphérique initiale du catalyseur, il est recommandé de controler l'alimentation en monomère dans le réacteur. Une vitesse moyenne d'alimentation favorable est inférieure ou égale à 500 Nl. x $h^{-1}$ x $g^{-1}$ de catalyseur. La prépolymérisation en suspension est poursuivie jusqu'à un degré de prépolymérisation adapté au procédé de polymérisation ultérieur, le degré de prépolymérisation étant défini par le rapport de la somme du poids de prépolymère formé plus le poids de catalyseur mis en oeuvre sur le poids de catalyseur mis en oeuvre.

A un stade quelconque de la prépolymérisation on ajoute aux composants le sphéroprotecteur obtenu habituellement par réaction préalable de l'alkylaluminium et du donneur d'électrons. Le sphéroprotecteur peut être introduit dans le milieu réactionnel de prépolymérisation. Il peut également être avantageusement additionné au prépolymère après la prépolymérisation soit directement dans le milieu réactionnel, soit au prépolymère stocké en suspension sous gaz inerte.

Dans un autre mode préféré de prépolymérisation en suspension sous agitation en régime turbulent, on procède à la prépolymérisation dans les conditions décrites précédemment jusqu'à un degré d'avancement réduit de prépolymérisation, de préférence inférieur à 20 g de polymère par gramme de catalyseur.

A ce stade, le prépolymère est isolé puis repris dans un système de prépolymérisation en phase gazeuse de façon à passer du degré d'avancement réduit de polymérisation au degré de prépolymérisation adapté au procédé de polymérisation ultérieur.

Cette partie de prépolymérisation en phase gazeuse s'effectue dans les conditions habituelles au procédé de polymérisation de l'éthylène en phase gazeuse. On peut, par exemple, associer dans un réacteur le prépolymère à degré d'avancement réduit à une charge de polyoléfine de granulométrie moyenne inférieure ou égale à 3000 et de préférence inférieure ou égale à 1000 µm (microns), en présence de préférence d'un cocatalyseur tel que défini précédemment. Après homogénéisation, on poursuit la prépolymérisation par introduction de monomère, de préférence l'éthylène, ou un mélange d'éthylène et de butène. De façon préférentielle la prépolymérisation en phase gazeuse est réalisée à une température comprise entre 30 et 110°C sous une pression totale inférieure ou égale à 20 bars.

Cette prépolymérisation en phase gazeuse est poursuivie jusqu'à l'obtention d'un degré de prépolymérisation adapté au procédé de polymérisation ultérieur. Afin de conserver au maximum la morphologie sphérique initiale du catalyseur, il est recommandé de contrôler l'alimentation en monomère dans le réacteur. Une vitesse moyenne d'alimentation favorable est inférieure ou égale à 500 Nl. x $h.^{-1}$ x $g^{-1}$ de catalyseur.

Comme précédemment, le sphéroprotecteur peut être introduit à un stade quelconque du procédé de prépolymérisation, ou encore additionné au prépolymère stocké sous gaz inerte après la prépolymérisation.

Dans le procédé selon l'invention, le rapport des concentrations molaires dans le sphéroprotecteur de l'alkylaluminium, calculé en aluminium, au donneur d'électrons est habituellement inférieur à 30 et mieux compris entre 10 et 0,1. Ce sphéroprotecteur est associé dans une proportion préférentielle de 500 à 4000 ppm calculée en aluminium pour 1000 à 15000 ppm de catalyseur dans le prépolymère de degré de prépolymérisation adapté au procédé de polymérisation ultérieur. Le rapport admis en poids de l'aluminium sur le catalyseur est compris entre $30.10^{-3}$ et 4.

Pour la fabrication du sphéroprotecteur on peut choisir les composants parmi les donneurs d'électrons définis précédemment et les alkylaluminiums connus habituellement comme cocatalyseur. Ces alkylaluminiums sont généralement choisis parmi les composés de formule $Al\,(R'')_c X'_d H_e$ dans laquelle :
- $X'$ est Cl, ou $R'''$, représentant un radical hydrocarboné saturé de $C_1$ à $C_{14}$
Avec : $0 < d < 1,5$ ; $0 < e < 1$ et $c + d + e = 3$
Comme exemples, on peut citer : $Al(C_2H_5)_3$, $Al(C_2H_5)_2Cl$,
$Al(C_4H_9)_3$, $Al_2(C_2H_5)_3Cl_3$, $Al(C_4H_9)_2H$, $Al(C_6H_{13})_3$, $Al(C_8H_{17})_3$,
$Al(C_2H_5)_2H$ et $Al(C_2H_5)_2(OC_2H_5)$.

Le mélange d'alkylaluminium et de donneur d'électrons s'effectue sous atmosphère inerte par tous moyens appropriés à ces types de composants. Lorsque le sphéroprotecteur liquide est ajouté au prépolymère après prépolymérisation, l'opération se fait, sous atmosphère inerte soit par mélange au prépolymère en suspension liquide inerte soit par imprégnation de la poudre de prépolymère.

Dans la mesure où un limitateur de chaîne est utilisé dans la prépolymérisation, on choisit de préférence l'hydrogène.

Le prépolymère obtenu selon l'invention est généralement stocké sous forme sèche en vue d'une utilisation ultérieure comme catalyseur de polymérisation en suspension ou en phase gazeuse pour la fabrication de polyéthylène linéaire en poudre à morphologie sphérique. Ce catalyseur, sous forme de prépolymère à morphologie sphérique, conserve sa morphologie en cours de polymérisation et permet, grâce à cette propriété, d'obtenir des polyéthylènes linéaires possédant également une morphologie sphérique.

Le catalyseur traité selon l'invention est utilisé comme un catalyseur classique dans les procédés de polymérisation en suspension ou en phase gazeuse des oléfines. Bien qu'il puisse être utilisé tel quel il n'est pas exclu, afin de régler sa productivité, d'ajouter en complément un cocatalyseur au milieu réactionnel. Dans ce cas le cocatalyseur peut être un sphéroprotecteur et mieux le sphéroprotecteur mis en oeuvre dans la préparation du prépolymère.

Dans un procédé de polymérisation d'éthylène en suspension, on opère de façon habituelle dans un milieu liquide hydrocarboné à des températures pouvant aller jusqu'à 120°C et sous des pressions pouvant aller jusqu'à 250 bars.

La polymérisation d'éthylène en phase gazeuse, en présence d'hydrogène et de gaz inerte peut être effectuée dans tout réacteur permettant une polymérisation en phase gazeuse et en particulier dans un réacteur à lit agité ou à lit fluidisé. Les conditions de mise en oeuvre sont connues de l'art antérieur. On opère généralement à une température inférieure au point de fusion Tf du polymère ou copolymère à synthétiser et plus particulièrement entre 20°C et (Tf -5°C) et sous une pression telle que l'éthylène et éventuellement les autres monomères hydrocarbonés présents dans le réacteur soient essentiellement en phase vapeur.

Les exemples suivants illustrent l'invention sans la limiter.

Préalablement, le catalyseur sphérique traité selon l'invention a été préparé dans les conditions ci-après.

Dans un réacteur en verre de 1,5 litre muni d'un moyen d'agitation, on introduit sous azote après séchage et purge 200 mM de n butyl-butyl sec. magnésium et 33 mM de triéthylaluminium, respectivement en solution molaire dans l'heptane. Le contact est maintenu pendant 1 heure à 80°C. On ajoute ensuite sous agitation 200 mM d'éther diisoamylique à 50°C, puis en 2 heures, toujours à 50°C, 550 mM de chlorure de tertiobutyle. On filtre et on lave le solide obtenu, formant support, deux fois avec 400 ml (cc.) d'heptane à 50°C.

On remet en suspension le solide dans 400 ml (cc.) d'heptane à 80°C et on ajoute en 1heure 600 mM de TiCl$_4$. On filtre et on lave avec deux fois 400 ml (cc.) d'heptane le catalyseur obtenu. Le catalyseur est séché à 70°C sous azote et stocké sous atmosphère inerte. Ce catalyseur solide se présente sous la forme de particules, parfaitement sphériques, de dimension moyenne de 30 μm (microns) environ.

### EXEMPLE 1

#### Préparation du prépolymère

Dans un réacteur de 8,2 l. degazé et sec on introduit sous azote et sous agitation de 400 tours/minute successivement à 40°C
3 l. d'hexane sec
6 mM de trihexylaluminium pur (THA)
3 g de catalyseur sphérique précédent en suspension dans 75 cc. d'hexane
0,8 bar absolu d'hydrogène
4 bars absolus d'azote,
puis :
de l'éthylène à un débit de 30 Nl/h durant 1 h, suivi d'un débit de 60 Nl/h durant 1 h, d'un débit de 130 Nl/h pendant 2 h et enfin de 200 N1/h pendant 50 minutes.

On arrête l'introduction d'éthylène, la pression totale chute de 6 bars absolus à 5 bars absolus en 5 minutes. L'agitation est arrêtée pour laisser décanter et évacuer le liquide surnageant. Puis après élimination du solvant restant à 50°C sous azote, on extrait la poudre de prépolymère qui est stockée sous atmosphère inerte.

On recueille 600 g de poudre de prépolymère sec à morphologie sphérique, sans agglomérats, de degré de prépolymérisation de 200 g de prépolymère par gramme de catalyseur de diamètre moyen des particules (dp 50) : 280 μm (microns).

#### Préparation des sphéroprotecteurs et du catalyseur sous forme prépolymère actif

Dans un tube de Schlenk on introduit et mélange à l'abri de la lumière, sous agitation et balayage d'azote du THA pur et un donneur d'électrons : paratertiobutylbenzoate de méthyle (PTBM), phényltriéthoxysilane (PTES), acétate de vinyle (VA), vinyltriéthoxysilane (VTES), tétraéthoxysilane (TES) dans un rapport molaire donné pour chaque essai sous le tableau I suivant. Les complexes ainsi préparés sont déposés au goutte à goutte sur le prépolymère pulvérulent précédent agité et sous atmosphère inerte. La quantité déposée est telle que la concentration en aluminium sur le prépolymère soit de 2000 ppm.

Polymérisation du butène-1 et de l'éthylène

On opère dans un réacteur de 8,2 l. préalablement séché, muni d'un agitateur tournant à une vitesse de 400 tours/minute et maintenu à 85°C pendant toute la polymérisation.

Dans le réacteur maintenu sous vide d'environ 1,33 Pa, en présence de 100 g de polyéthylène de fond de cuve on injecte du butène-1 jusqu'à l'obtention d'une pression de 1 bar, puis comme cocatalyseur un certain volume, donné pour chaque essai dans le tableau I suivant, du sphéroprotecteur identique à celui utilisé dans la préparation du prépolymère selon l'invention. On complète l'injection de butène-1 jusqu'à obtenir une pression de 2 bars. On injecte ensuite successivement dans le réacteur 2 bars d'hydrogène et 12,5 bars d'éthylène jusqu'à obtenir des pressions partielles d'hydrogène et d'éthylène respectivement égales à 2 et 12,5 bars.

On introduit alors dans le réacteur 10 g de prépolymère actif préparé précédemment, en effectuant cette introduction par poussée à l'azote avec poursuite de l'injection d'azote jusqu'à ce que la pression totale à l'intérieur du réacteur atteigne 21 bars. On maintient la pression dans le réacteur à cette valeur par injection d'éthylène et de butène-1 dans un rapport molaire butène-1/éthylène égal à 0,0466.

Après 4 h de réaction. la polymérisation est arrêtée par décompression du réacteur. On purge à l'azote et laisse refroidir.

Les conditions opératoires manquantes et les résultats des contrôles effectués sur le polyéthylène linéaire obtenu sont donnés dans le tableau I suivant, sachant que les essais 1 à 3 sont donnés à titre comparatif.

TABLEAU I

| Essai | Poids de prépolymère actif en g | Poids de cataly-seur cor-respon-dant en g | Nature du sphéroprotec-teur | Sphéro-protec-teur Al/DE*** | Cocatalyseur en ml (cc.)**** | densité | Morphologie | blocs en g | Coulabilité sec. | Pro-duc-tion en g | Productivité en g.PE./g.cata |
|-------|----|------|------|----|-----|-------|-----|-----|-----|-------|--------|
| 1  | 10   | 0,050 | THA       | —  | 0,4 | 0,923  | G   | 90  | >40 | 892    | 17 900 |
| 2  | 10   | 0,050 | IPRA*     | —  | 0,4 | 0,925  | G   | 370 | 46  | 2 560  | 51 200 |
| 3  | 10   | 0,039 | TEA       | —  | 0,3 | 0,924  | G   | 235 | 50  | 435    | 11 500 |
| 4  | 10   | 0,035 | THA/PTBM  | 3  | 0,2 | 0,923  | S   | 0   | 24  | 144    | 4 000  |
| 5  | 10   | 0,035 | THA/PTBM  | 6  | 0,2 | 0,924  | S   | 0   | 25  | 160    | 4 570  |
| 6  | 10   | 0,035 | THA/PTBM  | 10 | 0,2 | 0,923  | S/G | 155 | 34  | 1 290  | 36 850 |
| 7  | 10   | 0,035 | THA/PTES  | 5  | 0,2 | 0,924  | S   | 0   | 26  | 695    | 19 800 |
| 8  | 10   | 0,035 | THA/PTES  | 8  | 0,2 | 0,924  | S   | 0   | 25  | 632    | 18 000 |
| 9  | 10   | 0,035 | THA/PTES  | 10 | 0,2 | 0,920  | S   | 68  | 31  | 2 060  | 58 800 |
| 10 | 7    | 0,041 | THA/DPDMS** | 8 | 0,2 | 0,9235 | S   | 0   | 27  | 620    | 15 150 |
| 11 | 10,6 | 0,038 | THA/VA    | 6  | 0,2 | 0,927  | S   | 0   | 27  | 1 704  | 44 100 |
| 12 | 10   | 0,039 | THA/TES   | 10 | 0,3 | 0,917  | S   | 40  | 30  | 1 781  | 45 670 |
| 13 | 10   | 0,039 | THA/VTES  | 10 | 0,3 | 0,919  | S   | 40  | 29  | 1 763  | 45 200 |

* IPRA = Isoprenylaluminium à 70 % massique dans l'hexane

** DPMS = Diphényldiméthoxysilane

*** DE = Donneur d'électrons. Rapport en concentration molaire

**** Identique au sphéroprotecteur du prépolymère

    G = Granulaire

    S = Sphérique

La morphologie des prépolymères des essais 1, 6 et 7 est illustrée par les photos annexées.

EXEMPLE 2 - Essais 1 et 2

Préparation du prépolymère actif

Dans cet exemple le sphéroprotecteur, préparé selon l'exemple 1, est engagé en début de prépolymérisation.

Dans le réacteur et les conditions de l'exemple 1 on introduit - 3 l. d'hexane sec
- le sphéroprotecteur constitué du mélange de :
- 42 mM de THA
- 2,8 mM de PTES
- 3 g de catalyseur sphérique selon l'exemple 1
- 0,8 bar absolu d'hydrogène
- 4 bars absolus d'azote
puis :
- de l'éthylène à un débit de 30 Nl/h durant 1 h, suivi d'un débit de 60 Nl/h durant 1 h, d'un débit de 130 Nl/h durant 2 h et enfin de 200 Nl/h durant 1 h 30 min.

On recueille 768 g de poudre de prépolymère sec à morphologie sphérique, sans agrégats, de degré de prépolymérisation de 256 g de prépolymère par gramme de catalyseur, contenant 332 ppm de titane de dp.50 : 240 µm (microns), et contenant 1000 ppm d'aluminium.

Polymérisation du butène-1 et de l'éthylène

Dans les conditions de l'exemple 1 on polymérise du butène-1 et de l'éthylène en présence du prépolymère actif obtenu.

Les conditions opératoires manquants et les résultats des contrôles effectués sur le polyéthylène linéaire obtenu sont donnés dans le tableau II suivant.

EXEMPLE 3

Préparation du prépolymère actif

Dans un réacteur de 1 l. dégazé, muni d'un système d'agitation, on introduit à 50°C
- 1000 cc. d'hexane
- 21 mM de triisobutylaluminium
- 4,5 g de catalyseur sphérique préparé précédemment
Par l'event du réacteur on fait barboter en 2 h 30, 40 g d'un mélange en composition molaire de :
- 61,5 % d'éthylène
- 0,7 % de butène
- 37,8 % d'hydrogène
Le produit formé est lavé avec 500 ml (cc.) d'hexane on recueille 25 g, après séchage à 50°C sous azote, de prépolymère de degré de prépolymérisation de 5,5 g de prépolymère par gramme de catalyseur, la teneur en titane étant de l,54 % poids.

On mélange intimement sous atmosphère inerte 10 g de ce prépolymère à 100 g de poudre de polyéthylène et 0,5 ml (cc.) de THA. On introduit ce mélange sous azote dans un réacteur de 8,2 l. sec, muni d'un système d'agitation. On ajoute successivement
- 0,5 bar d'hydrogène
- 4 bars d'azote
- un mélange butène-éthylène dans le rapport molaire de 0,025 à un débit de 100 Nl/h pendant 2 h 15 min.

En fin d'opération on recueille 433 g de poudre dont 333 g de prépolymère sec de degré de polymérisation de 183 contenant 357 ppm de titane.

La poudre sèche recueillie est imprégnée sous agitation et atmosphère inerte d'un complexe liquide constitué du mélange de THA-acétate de vinyle (VA) dans le rapport molaire Al/donneur d'électrons de 6 et contenant 4000 ppm d'Al.

Polymérisation du butène-1 et de l'éthylène

Dans les conditions de l'exemple 1 on polymérise du butène-1 et de l'éthylène en présence du prépolymère actif obtenu. A titre comparatif, on effectue la même polymérisation avec le prépolymère non imprégné de sphéroprotecteur.

Les conditions opératoires manquantes et les résultats des contrôles effectués sur le polyéthylène linéaire obtenu sont donnés dans le tableau III suivant :

7

TABLEAU II

| Poids de prépolymère actif en g | Poids de catalyseur correspondant en g | Nature du sphéroprotecteur | Sphéroprotecteur Al/DE | Cocatalyseur en $ml$ (cc.) | densité | Morphologie | blocs en g | Coulabilité sec. | Production en g | Productivité en g.PE / g.cata |
|---|---|---|---|---|---|---|---|---|---|---|
| 10 | 0,039 | THA/PTES | 15 | 0,2 THA/PTES | 0,922 | S | 0 | 30 | 1 000 | 25 670 |
| 10 | 0,037 | THA/PTES | 15 | 0,2 THA seul | 0,922 | S/G | 74 | 40 | 1 667 | 45 000 |

TABLEAU III

| Essai | Poids de prépolymère actif en g | Poids de catalyseur correspondant en g | Nature du sphéroprotecteur | Sphéroprotecteur Al/DE | Cocatalyseur en $ml$ (cc.) | densité | Morphologie | blocs en g | Coulabilité sec. | Production en g | Productivité en g.PE / g.cata |
|---|---|---|---|---|---|---|---|---|---|---|---|
| 1 comparatif | 10 | 0,0283 | – | – | 1 THA | 0,929 | G | 6 | 35 | 870 | 30 780 |
| 2 | 10 | 0,0283 | THA/VA | 6 | 0,2 THA/VA | 0,924 | S | 0 | 26 | 940 | 33 200 |

EP 0 232 643 B1

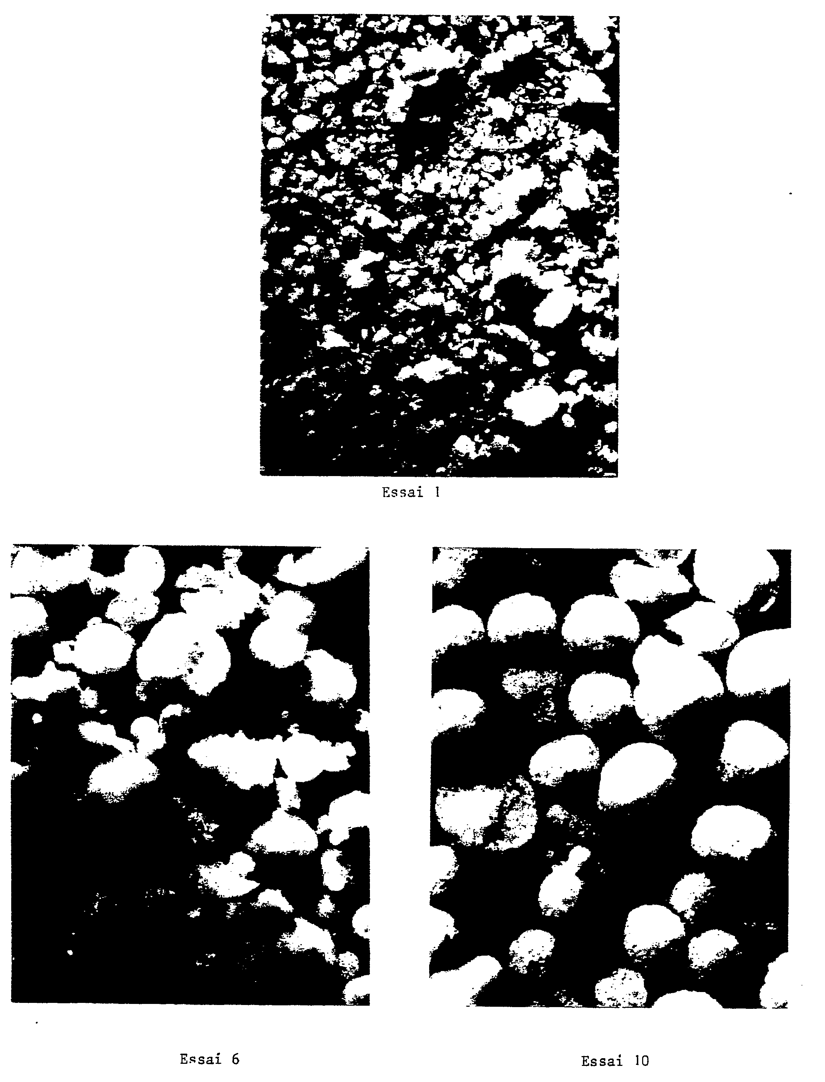

## Revendications

1. Procédé de traitement de catalyseur sphérique de polymérisation des oléfines contenant au moins un métal de transition, un composé du magnésium et un halogène caractérisé en ce que, en présence du catalyseur sphérique, on prépolymérise en présence d'un cocatalyseur choisi parmi les alkylaluminiums, au moins partiellement en suspension, de l'éthylène jusqu'à un degré de prépolymérisation adapté au procédé de polymérisation en suspension ou en phase gazeuse dans lequel le prépolymère sera mis ultérieurement en oeuvre, un sphéroprotecteur: produit de réaction d'alkylaluminium et de donneur d'électrons étant associé aux différents composants au plus tard après la prépolymérisation.

2. Procédé selon la revendication 1 caractérisé en ce qu'on prépolymérise en suspension jusqu'à un degré d'avancement réduit de polymérisation et que l'on reprend le prépolymère formé dans un système de prépolymérisation en phase gazeuse de façon à passer au degré de prépolymérisation adapté au procédé de polymérisation dans lequel le prépolymère sera mis ultérieurement en oeuvre.

3. Procédé selon la revendication 2 caractérisé en ce que le degré d'avancement est inférieur à 10 g de polymère par gramme de catalyseur.

4. Procédé selon l'une des revendications 1 à 3 caractérisé en ce que le degré de prépolymérisation est inférieur à 100 lorsque le prépolymère doit être utilisé comme catalyseur dans un procédé de polymérisation en suspension et supérieur à 100 pour un procédé de polymérisation en phase gazeuse, sans, dans ce dernier cas, que le prépolymère formé représente plus de 10 % du polymère final.

5. Procédé selon l'une des revendications 1 à 4 caractérisé en ce que dans la partie de prépolymérisation en phase gazeuse le monomère est introduit dans le réacteur à un débit moyen égal ou inférieur à 500 Nl. x $h^{-1}$ x $g^{-1}$ de catalyseur sphérique.

6. Procédé selon l'une des revendications 1 à 5 caractérisé en ce que dans la prépolymérisation en suspension le monomère est introduit dans le réacteur à un débit moyen égal ou inférieur à 500 Nl. x $h^{-1}$ x $g^{-1}$ de catalyseur sphérique.

7. Procédé selon l'une des revendications 1 à 6 caractérisé en ce que le sphéroprotecteur est obtenu, préalablement à son ajout, par réaction de l'alkylaluminium et du donneur d'électrons.

8. Procédé selon l'une des revendications 5 à 7 caractérisé en ce que le rapport des concentrations molaires de l'aluminium au donneur d'électrons est inférieur à 30.

9. Procédé selon l'une des revendications 1 à 8 caractérisé en ce que le complexe liquide est associé dans une proportion de 500 à 4000 ppm calculée en aluminium pour 1000 à 15000 ppm de catalyseur dans le prépolymère de degré de prépolymérisation adapté au procédé de polymérisation dans lequel le prépolymère sera mis ultérieurement en oeuvre.

10. Procédé selon l'une des revendications 1 à 9 caractérisé en ce que le rapport en poids de l'aluminium sur le catalyseur est compris entre 30.$10^{-3}$ et 4.

11. Procédé de fabrication en suspension ou en phase gazeuse de polyéthylène linéaire en poudre à morphologie sphérique caractérisé en ce qu'on utilise un catalyseur préparé selon l'une des revendications 1 à 10.

12. Procédé selon la revendication 11 caractérisé en ce qu'on ajoute au milieu réactionnel un cocatalyseur choisi parmi les sphéroprotecteurs.

## Claims

1. A process for the treatment of a spherical catalyst for the polymerization of olefins, containing at least one transition metal, a magnesium compound and a halogen, characterized in that ethylene is prepolymerized in the presence of a cocatalyst selected from the alkyl aluminiums and at least partially in suspension, to a degree of prepolymerization suitable for the process of polymerization in suspension or in the gaseous phase in which the prepolymer will subsequently be used, a sphereprotector which is the product of the reaction between alkyl aluminium and an electron donor being associated with the various components at the latest after prepolymerization.

2. A process according to claim 1, characterized in that prepolymerization is performed in suspension to a reduced degree of advance of polymerization and the prepolymer formed is taken up in a system for prepolymerization in the gaseous phase so as to proceed to the degree of prepolymerization suitable for the polymerization process in which the prepolymer will subsequently be used.

3. A process according to claim 2, characterized in that the degree of advance is less than 10 g of polymer per gram of catalyst.

4. A process according to one of claims 1 to 3, characterized in that the degree of prepolymerization is lower than 100 when the prepolymer is to be used as a catalyst in a process for polymerization in suspension, and higher than 100 for a process of polymerization in the gaseous phase without, in the latter case, the prepolymer formed representing more than 10% of the final polymer.

5. A process according to one of claims 1 to 4, characterized in that in the prepolymerization stage in the gaseous phase the monomer is introduced into the reactor at an average rate equal to or lower than 500 N1. x $h^{-1}$ x $g^{-1}$ of spherical catalyst.

6. A process according to one of claims 1 to 5, characterized in that in the prepolymerization in suspension the monomer is introduced into the reactor at an average rate equal to or lower than 500 N1. x h⁻¹ x g⁻¹ of spherical catalyst.

7. A process according to one of claims 1 to 6, characterized in that the sphere-protector is obtained, prior to its addition, by reacting the alkyl aluminium with the electron donor.

8. A process according to one of claims 5 to 7, characterized in that the ratio of molar concentrations between the aluminium and the electron donor is lower than 30.

9. A process according to one of claims 1 to 8, characterized in that liquid complex is associated in a proportion of 500 to 4000 ppm calculated in aluminium to 1000 to 15000 ppm of catalyst in the prepolymer of degree of prepolymerization suitable for the polymerization process in which the prepolymer will be subsequently used.

10. A process according to one of claims 1 to 9, characterized in that the aluminium: catalyst weight ratio is between $30.10^{-3}$ and 4.

11. A process for the production in suspension or in the gaseous phase of pulverulent linear polyethylene of spherical morphology, characterized in that a catalyst is used which is prepared according to one of claims 1 to 10.

12. A process according to claim 11, characterized in that a cocatalyst selected from the sphere-protectors is added to the reaction medium.

**Patentansprüche**

1. Verfahren zur Behandlung eines kugelförmigen Katalysators zur Olefinpolymerisation, der mindestens ein Übergangsmetall, eine Magnesiumverbindung und ein Halogen enthält, dadurch gekennzeichnet, daß man in Gegenwart des kugelförmigen Katalysators und in Gegenwart eines aus den Alkylaluminiumverbindungen ausgewählten Cokatalysators das Ethylen wenigstens teilweise in Suspension bis zu einem Vorpolymerisationsgrad vorpolymerisiert, an das Polymerisationsverfahren in Suspension oder in der Gasphase, in dem das Vorpolymer anschliessend eingebracht wird, angepaßt ist, und ein Kugelformprotektor, Reaktionsprodukt von Alkylaluminium und einem Elektronendonator, das an die verschiedenen Komponenten bis spätestens nach der Vorpolymerisation gebunden ist.

2. Verfahren nach Anspruch 1, dadurch gekennzeichnet, daß man in Suspension bis zu einem weniger fortgeschrittenen Polymerisationsgrad vorpolymerisiert und daß man das gebildete Vorpolymere in einem Gasphasen-Vorpolymerisationssystem derart wieder einsetzt, daß man den Vorpolymerisationsgrad erreicht, der an das Polymerisationsverfahren angepaßt ist, in das das Vorpolymere später eingebracht wird.

3. Verfahren nach Anspruch 2, dadurch gekennzeichnet, daß der Polymerisationsgrad kleiner als 10 Gramm Polymer pro Gramm Katalysator ist.

4. Verfahren nach einem der Ansprüche 1 bis 3, dadurch gekennzeichnet, daß der Vorpolymerisationsgrad kleiner als 100 ist, wenn das Vorpolymere als Katalysator in einem Suspensionspolymerisationsverfahren verwendet werden soll, und größer als 100 für ein Polymerisationsverfahren in der Gasphase, ohne daß im letzteren Fall das gebildete Vorpolymere mehr als 10% des Endpolymeren darstellt.

5. Verfahren nach einem der Ansprüche 1 bis 4, dadurch gekennzeichnet, daß in der Vorpolymerisationsstufe in der Gasphase das Monomere in den Reaktor bei einem mittleren Durchsatz gleich oder kleiner 500 N1. x h⁻¹ x g⁻¹ des kugelförmigen Katalysators zugegeben wird.

6. Verfahren nach einem der Ansprüche 1 bis 5, dadurch gekennzeichnet, daß bei der Suspensionsvorpolymerisation das Monomere in den Reaktor bei einem mittleren Durchsatz gleich oder kleiner 500 N1. x h⁻¹ x g⁻¹ des kugelförmigen Katalysators zugegeben wird.

7. Verfahren nach einem der Ansprüche 1 bis 6, dadurch gekennzeichnet, daß der Kugelformprotektor vor seiner Zugabe durch Reaktion des Alkylaluminiums mit dem Elektronendonator erhalten wird.

8. Verfahren nach einem der Ansprüche 5 bis 7, dadurch gekennzeichnet, daß das Verhältnis der Molarkonzentrationen des Aluminiums zum Elektronendonator kleiner als 30 ist.

9. Verfahren nach einem der Ansprüche 1 bis 8, dadurch gekennzeichnet, daß der flüssige Komplex in einem Anteil von 500 bis 4000 ppm, berechnet als Aluminium, auf 100 bis 15000 ppm des Katalysators im Vorpolymeren gebunden ist, dessen Vorpolymerisationsgrad an das Polymerisationsverfahren, in das das Vorpolymere nachfolgend eingebracht wird, angepaßt ist.

10. Verfahren nach einem der Ansprüche 1 bis 9, dadurch gekennzeichnet, daß das Gewichtsverhältnis von Aluminium zum Katalysator zwischen $30 \cdot 10^{-3}$ und 4 ist.

11. Verfahren zur Herstellung von linearem Polyethylen als kugelförmiges Pulver in Suspension oder in der Gasphase, dadurch gekennzeichnet, daß man einen nach einem der Ansprüche 1 bis 10 hergestellten Katalysator einsetzt.

12. Verfahren nach Anspruch 11, dadurch gekennzeichnet, daß man zum Reaktionsmilieu einen aus den Kugelformprotektoren ausgewählten Cokatalysator einsetzt.

Essai 1

Essai 6

Essai 10